# FASCICULE DE BREVET EUROPEEN

(11) **EP 3 959 173 B1**
(45) Date de publication et mention de la délivrance du brevet: **03.06.2026**
(21) Numéro de dépôt: 20719440.8
(22) Date de dépôt: 21.04.2020
(51) Int. Cl.: C01B 21/086, C01B 21/093, C07F 1/02, H01M 10/0525, H01M 10/0568, H01M 10/052

(54) **PROCEDE DE PREPARATION DU BIS(FLUOROSULFONYLE) IMIDE**
VERFAHREN ZUR HERSTELLUNG VON BIS(FLUORSULFONYL)IMID
PROCESS FOR PREPARING BIS(FLUOROSULFONYL) IMIDE

(30) Priorité: 25.04.2019 FR 1904381
(43) Date de publication de la demande: 02.03.2022
(73) Titulaire: ARKEMA FRANCE, 92800 Puteaux (FR)
(72) Inventeur: DEUR-BERT, Dominique, 69491 PIERRE-BENITE Cedex (FR)
(74) Mandataire: Arkema Patent
(86) Numéro de dépôt international: PCT/EP2020/061062
(87) Numéro de publication internationale: WO 2020/216734

(56) Documents cités:
- WO-A1-2017/096333
- CN-A- 108 002 355
- CN-A- 109 592 655
- US-B1- 8 722 005

## Description

### Domaine technique

La présente invention concerne un procédé de préparation de bis(fluorosulfonyle) imide. En particulier, la présente invention concerné un procédé de préparation de bis(fluorosulfonyle) imide à partir de bis(halosulfonyle) imide.

### Technique antérieure

Les anions de type sulfonylimide, de par leur très faible basicité, sont de plus en plus utilisés dans le domaine du stockage d'énergie sous forme de sels inorganiques dans les batteries, ou de sels organiques dans les super condensateurs ou dans le domaine des liquides ioniques. Le marché des batteries étant en plein essor et la réduction des coûts de fabrication des batteries devenant un enjeu majeur, un procédé de synthèse à grande échelle et à bas coût de ce type d'anions est nécessaire.

Dans le domaine spécifique des batteries Li-ion, le sel actuellement le plus utilisé est le LiPF₆ mais ce sel montre de nombreux désavantages tels qu'une stabilité thermique limitée, une sensibilité à l'hydrolyse et donc une plus faible sécurité de la batterie. Récemment de nouveaux sels possédant le groupement FSO₂⁻ ont été étudiés et ont démontré de nombreux avantages comme une meilleure conductivité ionique et une résistance à l'hydrolyse. L'un de ces sels, le LiFSI (LiN(FSO₂)₂) a montré des propriétés très intéressantes qui font de lui un bon candidat pour remplacer le LiPF₆.

Il existe divers procédés de préparation du LiFSI. WO2009/123328 décrit notamment la préparation de LiFSI à partir du bis(chlorosulfonyle) imide, via différentes étapes de préparation de sels intermédiaires, tels que par exemple un sel de zinc de bis(fluorosulfonyle) imide, suivi d'un sel d'ammonium de bis(fluorosulfonyle) imide.

Un des intermédiaires réactionnels pour arriver au LiFSI est le bis(fluorosulfonyle) imide. WO 2015/012897 décrit la préparation du bis(fluorosulfonyle) imide par fluoration du bis(halosulfonyle) en présence d'acide fluorhydrique. La préparation du bis(fluorosulfonyle) imide, (HFSI), est obtenu dans des conditions de reflux d'acide fluorhydrique. La mise en œuvre du procédé dans ces conditions peut favoriser la formation de produits secondaires non désirés. En outre, les conditions opératoires appliquées dans ce procédé nécessitent un apport énergétique important ce qui augmente l'empreinte carbone de celui-ci.

Le document CN 109 592 655 décrit un procédé de préparation du bis(fluorosulfonyl)imide à partir du bis(chlorosulfonyl)imide en présence d'éthanol et de HF liquide. L'exemple 5 mentionne que l'éthanol et l'acide fluorhydrique sont additionnés.

Le document CN 108 002 355 concerne un procédé de préparation d'un sel de lithium du bis(fluorosulfonyle)imide incluant la mise en contact entre de l'HF anhydre et le bis(chlorosulfonyle)imide. L'exemple 3 décrit la réaction entre le bis(fluorosulfonyle)imide, du LiOH et du dichlorosulfoxyde.

Il existe donc encore un besoin d'un procédé de préparation de bis(fluorosulfonyle) imide ne présentant pas les inconvénients susmentionnés.

### Résumé de l'invention

Selon un premier aspect, la présente invention fournit un procédé de préparation du bis(fluorosulfonyle) imide comprenant les étapes de :
i) la fourniture d'un courant **A1** comprenant HF et la fourniture d'un réacteur contenant une phase liquide **A2** comprenant du bis(halosulfonyle) imide ;
ii) dans ledit réacteur, la mise en contact de ladite phase liquide **A2** avec ledit courant **A1** pour produire du bis(fluorosulfonyle) imide
caractérisé en ce que ledit courant **A1** est injecté dans ladite phase liquide **A2.**

De préférence, ledit réacteur comprend un moyen d'agitation mécanique de ladite phase liquide **A2.** On entend par « moyen d'agitation mécanique », un moyen d'agitation ne mettant pas en œuvre un dispositif aimanté à l'intérieur dudit réacteur tel que par exemple un barreau aimanté. La présente invention permet d'assurer une homogénéité de concentration en acide fluorhydrique en tout point du réacteur et ainsi d'éviter des zones du milieu réactionnel dans lesquelles la concentration stationnaire en HF serait plus élevée ce qui induirait une nette augmentation de la formation de produits secondaires non désirés et donc une nette diminution du rendement en bis(fluorosulfonyle) imide. La présente invention permet également d'assurer une homogénéité de la température en tout point du milieu réactionnel, et d'éviter l'obtention de points chauds dans le réacteur favorisant également les réactions de dégradations.

Afin de contrôler la concentration stationnaire en HF, de préférence, ledit courant **A1** est injecté en continu dans ladite phase liquide **A2.**

Selon un mode de réalisation préféré, l'étape ii) est mise en œuvre dans des conditions de pression et de température de sorte à maintenir le bis(halosulfonyle) imide et le bis(fluorosulfonyle) imide produit sous forme liquide.

Selon un mode de réalisation préféré, au cours de l'étape ii), la température de ladite phase liquide **A2** est maintenue substantiellement constante.

Selon un mode de réalisation préféré, au cours de l'étape ii), la température de ladite phase liquide **A2** varie d'au maximum 5°C en valeur absolue, de préférence d'au maximum 3°C en valeur absolue, encore plus préférentiellement d'au maximum 2°C en valeur absolue, voire en particulier d'au maximum 1°C en valeur absolue.

Selon un mode de réalisation préféré, ledit réacteur comprend également un tube plongeur par lequel ledit courant **A1** est injecté dans ladite phase liquide **A2.**

Selon un mode de réalisation préféré, ledit réacteur comprend un moyen d'agitation mécanique de ladite phase liquide **A2** et ledit courant **A1** est injecté dans ladite phase liquide **A2** à proximité dudit moyen d'agitation mécanique.

Selon un mode de réalisation préféré, la vitesse d'introduction, dans ladite phase liquide **A2,** de l'acide fluorhydrique contenu dans ledit courant **A1** est d'au moins 1 mole d'HF / mole de bis(halosulfonyle) imide / heure et, de préférence d'au plus 100 moles d'HF / mole de bis(halosulfonyle) imide / heure.

Selon un mode de réalisation préféré, l'étape ii) est mise en œuvre avec un ratio molaire HF/[bis(halosulfonyle) imide] d'au moins 2,0 et d'au plus 3,0.

Selon un mode de réalisation préféré, l'étape ii) est mise en œuvre à une température supérieure à 0°C.

Selon un mode de réalisation préféré, le composé bis(halosulfonyle) imide est le bis(chlorosulfonyle) imide.

Selon un autre aspect, la présente invention fournit un procédé de préparation de sel de lithium de bis(fluorosulfonyle) imide comprenant les étapes :
a) mise en œuvre du procédé de préparation du bis(fluorosulfonyle) imide selon la présente invention ;
b) mise en contact du bis(fluorosulfonyle) imide avec une composition comprenant au moins un sel de lithium pour former ledit sel de lithium de bis(fluorosulfonyle) imide.

### Brève description des figures

[Fig. 1] représente schématiquement un réacteur pour la mise en œuvre du procédé de préparation du bis(fluorosulfonyle) imide selon un mode de réalisation particulier.
[Fig. 2] représente schématiquement une vue simplifiée en coupe d'un réacteur pour la mise en œuvre du procédé de préparation du bis(fluorosulfonyle) imide selon un mode de réalisation particulier.

### Description détaillée de l'invention

Selon un premier aspect, la présente invention fournit un procédé de préparation du bis(fluorosulfonyle) imide. De préférence, ledit procédé comprend les étapes de :
i) la fourniture d'un courant **A1** comprenant HF et la fourniture d'un réacteur contenant une phase liquide **A2** comprenant du bis(halosulfonyle) imide ;
ii) dans ledit réacteur, la mise en contact de ladite phase liquide **A2** avec ledit courant **A1** pour produire du bis(fluorosulfonyle) imide.

Dans le présent procédé, ledit courant **A1** peut être un courant gazeux ou un courant liquide. Ainsi, dans ledit courant **A1,** l'acide fluorhydrique peut être sous forme gazeuse ou sous la forme liquide.

Selon un mode de réalisation particulier, ladite phase liquide **A2** comprend du bis(halosulfonyle) imide mais est dépourvu de solvant organique. Ainsi, l'étape ii) de fluoration du bis(halosulfonyle) imide en bis(fluorosulfonyle) imide est mis en œuvre en l'absence de solvant organique.

Selon un mode de réalisation particulier alternatif, ladite phase liquide **A2** comprend du bis(halosulfonyle) imide et un solvant organique. Le solvant organique SO1 peut être choisi parmi les esters, les nitriles, les éthers, les solvants aromatiques, les carbonates, les solvants cycliques ou hétérocycliques et leurs mélanges. De préférence, le solvant organique SO1 est choisi dans le groupe constitué de l'acétate de méthyle, l'acétate de butyle, de l'acétate d'éthyle, de l'acétate de propyle, de l'acétate d'isopropyle, du butyronitrile, du valéronitrile, du benzonitrile, du diisopropyl éther, du 2-méthoxy-2-méthylbutane, du cyclopentylméthyl éther, du benzène, du toluène, du chlorobenzène, du dichlorobenzène, des xylènes, de l'éthylbenzène, 1,4-dioxane, du carbonate de diméthyle, du carbonate d'éthylène, du sulfolane et de leurs mélanges.

De préférence, l'acide fluorhydrique est de l'acide fluorhydrique anhydre. Dans le cadre de l'invention, par « acide fluorhydrique anhydre », on entend de l'HF contenant moins de 500 ppm d'eau, de préférence moins de 300 ppm d'eau de manière préférée moins de 200 ppm d'eau. De préférence, ledit réacteur comprend un moyen d'agitation mécanique. De préférence, ledit moyen d'agitation mécanique est un moyen d'agitation mécanique rotatif. Ledit moyen d'agitation mécanique comprend un moteur imprimant, par l'intermédiaire d'un arbre, un mouvement de rotation à un mobile d'agitation qui brasse ladite phase liquide **A2.** Ledit mobile d'agitation peut être de différentes formes. Par exemple, le mobile d'agitation peut être du type hélice, turbine à pales ou ancre.

Le mobile d'agitation peut être de type hélice et comprendre au moins deux pales, de préférence, 2, 3, 4, 5, 6, 7 ou 8 pales. Dans ce cas, le mobile d'agitation provoque un mouvement essentiellement axial avec un faible cisaillement. Le diamètre du mobile d'agitation est par exemple compris entre 1/5 et 2/3 du diamètre dudit réacteur. Un tel ratio entre le diamètre du mobile d'agitation et le diamètre du réacteur permet de favoriser une agitation axiale et donc l'homogénéisation et le transfert de chaleur. Le pas de l'hélice est de préférence compris entre 0,5 et 3 fois le diamètre du mobile d'agitation, en particulier le pas est égal au diamètre du mobile d'agitation. Le pas se réfère ici à la distance théorique d'avancement de l'hélice en un tour complet de 360°. Dans cette configuration, les pales du mobile d'agitation peuvent être disposées de manière perpendiculaire à l'arbre ou être disposées de manière inclinée par rapport à l'arbre.

Le mobile d'agitation peut être de type turbine à pales. Dans une telle configuration, ledit mobile d'agitation comprend un disque horizontal sur lequel sont disposées deux ou plusieurs pales, en particulier de 4 à 8 pales. Dans une telle configuration, ledit mobile d'agitation induit un débit essentiellement radial. Le diamètre du mobile d'agitation est par exemple compris entre 1/5 et 2/3 du diamètre dudit réacteur. Les pales peuvent être plates ou de forme incurvée. Les pales sont généralement disposées perpendiculairement au disque horizontal.

Le mobile d'agitation peut être de type ancre. Celui-ci est alors constitué d'un tube ou d'un ruban plat, en forme de U tournant dans un plan diamétral à proximité de la paroi du réacteur. La présence d'un moyen d'agitation mécanique rotatif permet une bonne homogénéité des concentrations et des températures en tout point du réacteur. En effet, le moyen d'agitation mécanique rotatif favorise le transfert thermique avec les parois du réacteur.

De préférence, ledit courant **A1** est injecté dans ladite phase liquide **A2.** Le terme « injecté » signifie que le courant **A1** est introduit directement dans la phase liquide **A2.** Ainsi, l'acide fluorhydrique réagit avec le bis(halosulfonyle) imide pour former le bis(fluorosulfonyle) imide. Le bis(halosulfonyle) imide peut être le bis(chlorosulfonyle) imide, le bis(bromosulfonyle) imide ou le bis(iodosulfonyle) imide ou un mélange de ceux-ci. De préférence, dans la présente demande, le bis(halosulfonyle) imide est le bis(chlorosulfonyle) imide. En particulier, ledit courant **A1** est injecté en continu dans ladite phase liquide **A2.**

En outre, la mise en œuvre de l'étape ii) aboutit à la formation d'un composé de formule HX dans laquelle X est CI, Br ou I. Le composé de formule HX produit est de préférence sous forme gazeuse dans les conditions opératoires du présent procédé, i.e. dans les conditions de température et de pression mise en œuvre pour le présent procédé, en particulier à l'étape ii). Le composé de formule HX peut être dégazé du milieu réactionnel par exemple par entrainement (stripping) par un gaz neutre (tel que l'azote, l'hélium ou l'argon). De préférence, le composé HX est éliminé en continu au cours de la mise en œuvre de l'étape ii). De préférence, le composé HX est HCl lorsque le bis(halosulfonyle) imide est le bis(chlorosulfonyle) imide. Le composé HX est HBr lorsque le bis(halosulfonyle) imide est le bis(bromosulfonyle) imide. Le composé HX est HI lorsque le bis(halosulfonyle) imide est le bis(iodosulfonyle) imide.

De préférence, l'étape ii) est mise en œuvre dans des conditions de pression et de température de sorte à maintenir le bis(halosulfonyle) imide et le bis(fluorosulfonyle) imide produit sous forme liquide.

Ainsi, l'étape ii) peut être mise en œuvre à pression atmosphérique ou à une pression supérieure à la pression atmosphérique. De préférence, l'étape ii) peut être mise en œuvre à une pression inférieure à 10 bara, avantageusement à une pression inférieure à 9 bara, de préférence inférieure à 8 bara, plus préférentiellement inférieure à 7 bara, en particulier inférieure à 6 bara. L'étape ii) peut être mise en œuvre à une température supérieure à 0°C, avantageusement supérieure à 5°C, de préférence supérieure à 10°C, plus préférentiellement supérieure à 15°C.

De préférence, l'étape ii) est mise en œuvre à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C.

Ainsi, l'étape ii) peut être mise en œuvre à une température supérieure à 0°C, avantageusement supérieure à 5°C, de préférence supérieure à 10°C, plus préférentiellement supérieure à 15°C ; et à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C.

De préférence, l'étape ii) peut être mise en œuvre à une température supérieure à 0°C, avantageusement supérieure à 5°C, de préférence supérieure à 10°C, plus préférentiellement supérieure à 15°C; et à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C ; et à pression atmosphérique.

De préférence, l'étape ii) peut être mise en œuvre à une température supérieure à 0°C, avantageusement supérieure à 5°C, de préférence supérieure à 10°C, plus préférentiellement supérieure à 15°C; et à une température inférieure à 150°C, avantageusement inférieure à 140°C, de préférence inférieure à 130°C, plus préférentiellement inférieure à 120°C, en particulier inférieure à 110°C, plus particulièrement inférieure à 100°C, de manière privilégiée inférieure à 90°C, de manière avantageusement privilégiée inférieure à 80°C, de manière préférentiellement privilégiée inférieure à 70°C, de manière plus préférentiellement privilégiée inférieure à 60°C, de manière particulièrement privilégiée inférieure 50°C ; et à une pression supérieure à 1 bara ; et inférieure à 10 bara, avantageusement à une pression inférieure à 9 bara, de préférence inférieure à 8 bara, plus préférentiellement inférieure à 7 bara, en particulier inférieure à 6 bara.

De préférence, au cours de l'étape ii), la température de ladite phase liquide **A2** est maintenue substantiellement constante. Dans la présente demande, on entend par « substantiellement constante » une variation de température d'au maximum 5°C en valeur absolue, de préférence d'au maximum 3°C en valeur absolue, encore plus préférentiellement d'au maximum 2°C en valeur absolue, voire en particulier d'au maximum 1°C en valeur absolue.

Ainsi, au cours de l'étape ii), la température de ladite phase liquide **A2** varie d'au maximum 5°C en valeur absolue, de préférence d'au maximum 3°C en valeur absolue, encore plus préférentiellement d'au maximum 2°C en valeur absolue, voire en particulier d'au maximum 1°C en valeur absolue.

Cette faible variation de la température est permise grâce à l'injection, de préférence en continu, du courant **A1** directement dans la phase liquide **A2** et particulièrement lorsque ledit courant **A1** est injecté, de préférence en continu, à proximité du mobile d'agitation, comme expliqué ci-dessous. Ce faible gradient de température de la phase liquide permet de minimiser voire d'éliminer les réactions secondaires pouvant générer des impuretés telles que FSO₃H ou FSO₂NH₂.

De préférence, à l'étape ii), la vitesse d'introduction, dans ladite phase liquide **A2,** de l'acide fluorhydrique contenu dans ledit courant **A1** est d'au moins 1 mole d'HF / mole de bis(halosulfonyle) imide / heure, avantageusement d'au moins 5 moles d'HF / mole de bis(halosulfonyle) imide / heure, de préférence d'au moins 10 moles d'HF / mole de bis(halosulfonyle) imide / heure, plus préférentiellement d'au moins 20 moles d'HF / mole de bis(halosulfonyle) imide / heure, en particulier d'au moins 30 moles d'HF / mole de bis(halosulfonyle) imide / heure, plus particulièrement d'au moins 40 moles d'HF / mole de bis(halosulfonyle) imide / heure, de manière privilégiée d'au moins 50 moles d'HF / mole de bis(halosulfonyle) imide / heure.

En particulier, à l'étape ii), la vitesse d'introduction, dans ladite phase liquide **A2,** de l'acide fluorhydrique contenu dans ledit courant **A1** est d'au plus 130 moles d'HF / mole de bis(halosulfonyle) imide / heure, avantageusement d'au plus 120 moles d'HF / mole de bis(halosulfonyle) imide / heure, de préférence d'au plus 110 moles d'HF / mole de bis(halosulfonyle) imide / heure, en particulier d'au plus 100 moles d'HF / mole de bis(halosulfonyle) imide / heure.

Ainsi, à l'étape ii), la vitesse d'introduction, dans ladite phase liquide **A2,** de l'acide fluorhydrique contenu dans ledit courant **A1** est d'au moins 1 mole d'HF / mole de bis(halosulfonyle) imide / heure, avantageusement d'au moins 5 moles d'HF / mole de bis(halosulfonyle) imide / heure, de préférence d'au moins 10 moles d'HF / mole de bis(halosulfonyle) imide / heure, plus préférentiellement d'au moins 20 moles d'HF / mole de bis(halosulfonyle) imide / heure, en particulier d'au moins 30 moles d'HF / mole de bis(halosulfonyle) imide / heure, plus particulièrement d'au moins 40 moles d'HF / mole de bis(halosulfonyle) imide / heure, de manière privilégiée d'au moins 50 moles d'HF / mole de bis(halosulfonyle) imide / heure ; et d'au plus 130 moles d'HF / mole de bis(halosulfonyle) imide / heure, avantageusement d'au plus 120 moles d'HF / mole de bis(halosulfonyle) imide / heure, de préférence d'au plus 110 moles d'HF / mole de bis(halosulfonyle) imide / heure, en particulier d'au plus 100 moles d'HF / mole de bis(halosulfonyle) imide / heure.

En particulier, à l'étape ii), la vitesse d'introduction, dans ladite phase liquide **A2,** de l'acide fluorhydrique contenu dans ledit courant **A1** est d'au moins 1 mole d'HF / mole de bis(chlorosulfonyle) imide / heure, avantageusement d'au moins 5 moles d'HF / mole de bis(chlorosulfonyle) imide / heure, de préférence d'au moins 10 moles d'HF / mole de bis(chlorosulfonyle) imide / heure, plus préférentiellement d'au moins 20 moles d'HF / mole de bis(chlorosulfonyle) imide / heure, en particulier d'au moins 30 moles d'HF / mole de bis(chlorosulfonyle) imide / heure, plus particulièrement d'au moins 40 moles d'HF / mole de bis(chlorosulfonyle) imide / heure, de manière privilégiée d'au moins 50 moles d'HF / mole de bis(chlorosulfonyle) imide / heure.

Plus particulièrement, à l'étape ii), la vitesse d'introduction, dans ladite phase liquide **A2,** de l'acide fluorhydrique contenu dans ledit courant **A1** est d'au plus 130 moles d'HF / mole de bis(chlorosulfonyle) imide / heure, avantageusement d'au plus 120 moles d'HF / mole de bis(chlorosulfonyle) imide / heure, de préférence d'au plus 110 moles d'HF / mole de bis(chlorosulfonyle) imide / heure, en particulier d'au plus 100 moles d'HF / mole de bis(chlorosulfonyle) imide / heure.

Ainsi, à l'étape ii), la vitesse d'introduction, dans ladite phase liquide **A2,** de l'acide fluorhydrique contenu dans ledit courant **A1** est d'au moins 1 mole d'HF / mole de bis(chlorosulfonyle) imide / heure, avantageusement d'au moins 5 moles d'HF / mole de bis(chlorosulfonyle) imide / heure, de préférence d'au moins 10 moles d'HF / mole de bis(chlorosulfonyle) imide / heure, plus préférentiellement d'au moins 20 moles d'HF / mole de bis(chlorosulfonyle) imide / heure, en particulier d'au moins 30 moles d'HF / mole de bis(chlorosulfonyle) imide / heure, plus particulièrement d'au moins 40 moles d'HF / mole de bis(chlorosulfonyle) imide / heure, de manière privilégiée d'au moins 50 moles d'HF / mole de bis(chlorosulfonyle) imide / heure ; et d'au plus 130 moles d'HF / mole de bis(chlorosulfonyle) imide / heure, avantageusement d'au plus 120 moles d'HF / mole de bis(chlorosulfonyle) imide / heure, de préférence d'au plus 110 moles d'HF / mole de bis(chlorosulfonyle) imide / heure, en particulier d'au plus 100 moles d'HF / mole de bis(chlorosulfonyle) imide / heure.

La vitesse d'introduction de l'acide fluorhydrique mentionnée ci-dessus permet d'éviter des pertes d'HF notamment lorsque celui-ci est introduit sous forme gazeuse. Ceci permet donc d'améliorer l'efficacité globale du procédé.

En outre, la vitesse d'introduction de l'HF peut être contrôlée de sorte à maintenir une concentration stationnaire faible en HF dans le milieu réactionnel, c'est-à-dire dans ladite phase liquide **A2.** L'HF sera alors consommé de suite dans la réaction de fluoration et le ratio molaire entre l'HF et le bis(halosulfonyle) imide sera proche de la stœchiométrie. Le présent procédé permet de limiter l'usage d'un excès en HF. Ceci représente un avantage économique important ; le coût du besoin en HF sera proche de celui du besoin en HF théorique requis par la stœchiométrie de la réaction.

Ainsi, selon un mode de réalisation préféré, l'étape ii) est mise en œuvre avec un ratio molaire HF/[bis(halosulfonyle) imide] d'au moins 2,0, de préférence d'au moins 2,05, en particulier d'au moins 2,1. De préférence, l'étape ii) est mise en œuvre avec un ratio molaire HF/[bis(halosulfonyle) imide] d'au plus 3,1, de préférence d'au plus 3,0, en particulier d'au plus 2,9.

Ainsi, l'étape ii) est mise en œuvre avec un ratio molaire HF/[bis(halosulfonyle) imide] d'au moins 2,0, de préférence d'au moins 2,05, en particulier d'au moins 2,1 ; et d'au plus 3,1, de préférence d'au plus 3,0, en particulier d'au plus 2,9.

De préférence, l'étape ii) est mise en œuvre avec un ratio molaire HF/[bis(chlorosulfonyle) imide] d'au moins 2,0, de préférence d'au moins 2,05, en particulier d'au moins 2,1. De préférence, l'étape ii) est mise en œuvre avec un ratio molaire HF/[bis(chlorosulfonyle) imide] d'au plus 3,1, de préférence d'au plus 3,0, en particulier d'au plus 2,9.

Ainsi, l'étape ii) est mise en œuvre avec un ratio molaire HF/[bis(chlorosulfonyle) imide] d'au moins 2,0, de préférence d'au moins 2,05, en particulier d'au moins 2,1 ; et d'au plus 3,1, de préférence d'au plus 3,0, en particulier d'au plus 2,9.

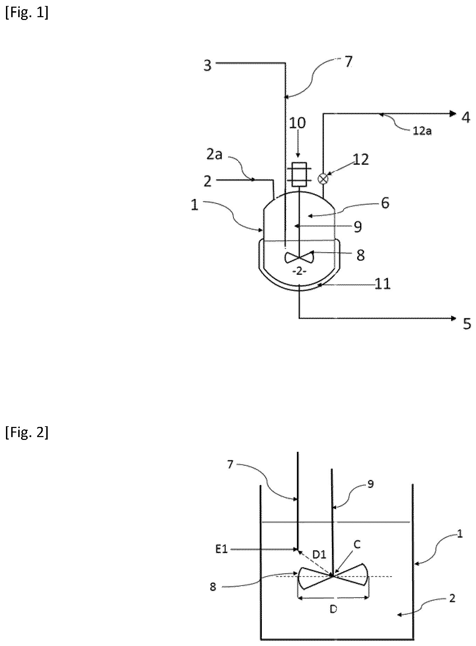

Selon un mode de réalisation préféré, ledit réacteur comprend un tube plongeur. Celui-ci permet d'injecter ledit courant **A1** directement dans la phase liquide **A2.** Ainsi une des extrémités E1 du tube plongeur est disposée dans ladite phase liquide **A2.** De préférence, ledit tube plongeur est positionné à proximité dudit moyen d'agitation mécanique. Comme précisé ci-dessus, le moyen d'agitation mécanique, de préférence rotatif, comprend un mobile d'agitation. Ledit tube plongeur est ainsi positionné à proximité dudit mobile d'agitation. Plus particulièrement, l'extrémité E1 du tube plongeur disposée dans ladite phase liquide **A2** est positionnée à proximité dudit moyen d'agitation mécanique, de préférence à proximité dudit mobile d'agitation. Ceci permet d'améliorer la diffusion dudit courant **A1** au sein de ladite phase liquide **A2.** Un tel arrangement entre le tube plongeur et le mobile d'agitation assure une parfaite homogénéité de température et de concentration au sein de ladite phase liquide **A2.** Ainsi, la plus grande dimension dudit mobile d'agitation passant par son centre « C » est notée « D ». Selon un mode de réalisation particulier, la plus courte distance, notée D1, entre l'extrémité E1 du tube plongeur disposée dans ladite phase liquide **A2** et le centre dudit mobile d'agitation est inférieure à 2*D. Le centre « C » du mobile d'agitation est généralement situé sur l'axe central dudit arbre du moyen d'agitation mécanique (Fig. 2).

Ainsi, selon un mode de réalisation particulier, ledit procédé comprend les étapes :
i) la fourniture d'un courant **A1** comprenant HF et la fourniture d'un réacteur contenant une phase liquide **A2** comprenant du bis(halosulfonyle) imide ; ledit réacteur comprenant un tube plongeur dont une des extrémités E1 est disposée dans ladite phase liquide **A2** et un moyen d'agitation mécanique comprenant un mobile d'agitation disposé dans ladite phase liquide **A2** ;
ii) dans ledit réacteur, la mise en contact de ladite phase liquide **A2** avec ledit courant **A1** pour produire du bis(fluorosulfonyle) imide
caractérisé en ce que ledit courant **A1** est injecté dans ladite phase liquide **A2** par l'intermédiaire dudit tube plongeur et la distance D1 entre ladite extrémité E1 dudit tube plongeur et le centre C dudit mobile d'agitation est inférieure à 2*D ; D représentant la plus grande dimension dudit mobile d'agitation passant par son centre C.

De préférence, ledit réacteur peut comprendre une double enveloppe. Ceci permet de garantir un chauffage homogène du réacteur et d'assurer les échanges thermiques avec ladite phase liquide **A2.**

De préférence, l'étape ii) est mise en œuvre en l'absence de catalyseur. Ceci permet d'obtenir des rendements très élevés comme décrit ci-dessous tout en évitant la mise en œuvre d'étapes ultérieures de purification du bis(fluorosulfonyle) imide pour éliminer toute trace du catalyseur. Comme précisé dans la présente demande, au cours de l'étape ii) l'acide fluorhydrique va réagir avec le bis(halosulfonyle) imide pour former du bis(fluorosulfonyle) imide. Ainsi, au cours de la mise en œuvre du procédé, ladite phase liquide **A2** va se concentrer en bis(fluorosulfonyle) imide. La teneur massique en bis(fluorosulfonyle) imide dans ladite phase liquide **A2** va augmenter progressivement et la teneur massique en bis(halosulfonyle) imide dans ladite phase liquide **A2** va a contrario diminuer progressivement. Le présent procédé est mis en œuvre jusqu'à l'obtention de la conversion ou de la sélectivité souhaitée.

Le présent procédé permet d'obtenir une conversion en bis(halosulfonyle) imide, de préférence en bis(chlorosulfonyle) imide, d'au moins 95%, avantageusement d'au moins 96%, de préférence d'au moins 97%, plus préférentiellement d'au moins 98%, en particulier d'au moins 99%, plus particulièrement d'au moins 99,2%, de manière privilégiée d'au moins 99,5%, de manière préférentiellement privilégiée d'au moins 99,8%, de manière particulièrement privilégiée de 100%.

Le présent procédé permet d'obtenir un rendement en bis(fluorosulfonyle) imide d'au moins 80%, avantageusement d'au moins 85%, de préférence d'au moins 90%, plus préférentiellement d'au moins 95%.

Le présent procédé peut également comprendre une étape iii) de dégazage du réacteur ou d'entrainement (stripping) en présence d'un gaz inerte. Le gaz inerte est de préférence l'azote. Cette étape permet d'éliminer l'HCl éventuellement dissous dans ladite phase liquide **A2** et d'éliminer l'HF n'ayant pas réagi.

De préférence, ledit procédé comprend une étape iv) de récupération du bis(fluorosulfonyle) imide et optionnellement de purification de celui-ci.

La [Fig. 1] illustre schématiquement un réacteur 1 pour la mise en œuvre du procédé de préparation du bis(fluorosulfonyle) imide. Le réacteur 1 comprend une double enveloppe 11, un tube plongeur 7 et un moyen d'agitation mécanique rotatif 6. Ledit moyen d'agitation mécanique rotatif 6 comprend un moteur 10, un arbre 9 et un mobile de rotation 8. Le réacteur comprend également une phase liquide 2 introduite dans celui-ci par la conduite 2a. Cette phase liquide 2 est introduite dans le réacteur préalablement à la mise en œuvre de la réaction de fluoration. Celle-ci comprend du bis(chlorosulfonyle) imide. L'acide fluorhydrique 3 est introduit dans le réacteur par l'intermédiaire du tube plongeur 7. Comme illustré à la Fig. 1, l'acide fluorhydrique 3 est injecté dans la phase liquide 2 grâce au tube plongeur dont une des extrémités se trouve dans la phase liquide 2. En outre, l'extrémité E1 du tube plongeur 7 par laquelle l'HF est injecté dans la phase liquide se trouve à proximité du mobile de rotation 8 comme ceci est illustré à la Fig. 2. La distance D1 entre l'extrémité E1 du tube plongeur 7 et le centre C du mobile d'agitation 8 est inférieure à deux fois la distance D, cette dernière représentant la plus grande dimension passant par le centre C dudit mobile d'agitation 8 (Fig. 2). L'acide chlorhydrique formé au cours de la réaction est éliminé en continu par l'intermédiaire d'une vanne 12 et est récupéré en 4 pour traitement ultérieur ou purification. En fin de réaction, le réacteur 1 dont la phase liquide 2 comprend le bis(fluorosulfonyle) imide peut être vidangé et la phase liquide 2 est récupéré en 5 pour traitement ultérieur, par exemple purification ou mise en œuvre d'un procédé de préparation de sel de lithium de bis(fluorosulfonyle) imide tel que décrit ci-dessous.

Selon un second aspect, la présente invention concerne un procédé de préparation de sel de lithium de bis(fluorosulfonyle) imide. De préférence, ledit procédé comprend les étapes :
a) mise en œuvre du procédé de préparation du bis(fluorosulfonyle) imide selon la présente invention ;
b) mise en contact du bis(fluorosulfonyle) imide avec une composition comprenant au moins un sel de lithium pour former une composition comprenant ledit sel de lithium de bis(fluorosulfonyle) imide.

Selon un mode de réalisation préféré, la composition comprenant au moins un sel de lithium est une composition aqueuse, de préférence une suspension aqueuse ou une solution aqueuse. Selon un autre mode de réalisation préféré, la composition comprenant au moins un sel de lithium est une composition solide, de préférence la composition est constituée d'au moins un sel de lithium solide.

En particulier, le bis(fluorosulfonyle) imide est ajouté dans un récipient comprenant la composition comprenant au moins un sel de lithium. Le récipient peut être un réacteur, de préférence comprenant au moins un système d'agitation. Les éléments permettant d'introduire la composition obtenue à l'étape b) sont de préférence résistants à l'HF.

Selon un mode de réalisation, le sel de lithium est choisi dans le groupe constitué de LiOH, LiOH,H₂O, LiHCO₃, Li₂CO₃, LiCl, et de leurs mélanges. De préférence, le sel de lithium est Li₂CO₃. La composition, lorsqu'il s'agit d'une composition aqueuse comprenant au moins un sel de lithium, peut être préparée par tout moyen conventionnel de préparation de composition aqueuse alcaline. Il peut par exemple s'agir de la dissolution du sel de lithium dans de l'eau ultrapure ou désionisée, sous agitation.

Pour déterminer la quantité de sel de lithium à introduire, on peut typiquement procéder à une analyse de l'acidité totale du mélange à neutraliser.

Selon un mode de réalisation, l'étape c) est telle que :
- le rapport molaire du sel de lithium divisé par le nombre de basicités dudit sel par rapport au bis(fluorosulfonyle) imide est supérieur ou égal à 1, de préférence inférieur à 5, de préférence inférieur à 3, de façon préférentielle comprise entre 1 et 2 ; et/ou
- le rapport massique du sel de lithium sur la masse d'eau dans la composition aqueuse est comprise entre 0,1 et 2, de préférence entre 0,2 et 1 de manière préférée entre 0,3 et 0,7.

Par exemple, le sel Li₂CO₃ présente un nombre de basicités égal à 2.

L'étape b) du procédé selon l'invention peut être réalisée à une température inférieure ou égale à 40°C, de préférence inférieure ou égale à 30°C, préférentiellement inférieure ou égale à 20°C, et en particulier inférieure ou égale à 15°C.

Selon un mode de réalisation, le procédé selon l'invention comprend une étape supplémentaire de filtration de la composition **B** obtenue à l'étape b), conduisant à un filtrat **F** et à un gâteau **G.** Le sel de lithium de bis(fluorosulfonyle) imide peut être contenu dans le filtrat **F** et/ou dans le gâteau **G.** Le filtrat **F** peut être soumis à au moins une étape d'extraction avec un solvant organique **S** typiquement faiblement soluble dans l'eau, afin d'extraire le sel de lithium de bis(fluorosulfonyle) imide dans une phase organique. L'étape d'extraction conduit typiquement à la séparation d'une phase aqueuse et d'une phase organique. Dans le cadre de l'invention, et sauf mention contraire, par « faiblement soluble dans l'eau », on entend un solvant dont la solubilité dans l'eau est inférieure à 5% en poids. Le solvant organique **S** susmentionné est en particulier choisi parmi les familles suivantes: les esters, les nitriles, les éthers, les solvants chlorés, les solvants aromatiques, et leurs mélanges. De préférence, le solvant organique **S** est choisi parmi le dichlorométhane, l'acétate d'éthyle, l'acétate de butyle, le tétrahydrofurane, le diéthyléther, le valéronitrile et leurs mélanges. En particulier, le solvant organique **S** est l'acétate de butyle. Pour chaque extraction, la quantité massique de solvant organique utilisée peut varier entre 1/6 et 1 fois la masse du filtrat **F.** Le nombre d'extractions peut être compris entre 2 et 10. De préférence, la phase organique, résultant de(s) l'extraction(s), présente une teneur massique en sel de lithium de bis(fluorosulfonyle) imide allant de 5% à 40% en masse. La phase organique séparée (obtenue à l'issue de l'extraction) peut ensuite être concentrée pour atteindre une concentration en sel de lithium de bis(fluorosulfonyle) imide comprise entre 30% et 60%, de préférence entre 40% et 50% en masse, ladite concentration pouvant être réalisée par tout moyen d'évaporation connu de l'homme du métier.

Le gâteau **G** susmentionné peut être lavé avec un solvant organique **S'** choisi parmi les familles suivantes : les esters, les nitriles, les éthers, les solvants chlorés, les solvants aromatiques, et leurs mélanges. De préférence, le solvant organique **S'** est choisi parmi le dichlorométhane, l'acétate d'éthyle, l'acétate de butyle, le tétrahydrofurane, l'acétronitrile, le diéthyléther, le valéronitrile et leurs mélanges. En particulier, le solvant organique **S**' est l'acétate de butyle. La quantité massique de solvant organique **S'** utilisée peut varier entre 1 et 10 fois le poids du gâteau. La quantité totale de solvant organique **S'** destinée au lavage peut être utilisée en une seule fois ou en plusieurs fois dans le but notamment d'optimiser la dissolution du sel de lithium de bis(fluorosulfonyle) imide. De préférence, la phase organique, résultant du(des) lavage(s) du gâteau **G,** présente une teneur massique en sel de lithium de bis(fluorosulfonyle) imide allant de 5% à 20% en masse. La phase organique séparée résultant du(des) lavage(s) du gâteau **G,** peut ensuite être concentrée pour atteindre une concentration sel de lithium de bis(fluorosulfonyle) imide comprise entre 30% et 60%, de préférence entre 40% et 50% en masse, ladite concentration pouvant être réalisée par tout moyen d'évaporation connu de l'homme du métier. Selon un mode de réalisation, les phases organiques résultant de(s) l'extraction(s) du filtrat **F** et du(des) lavage(s) du gâteau **G,** peuvent être rassemblées ensemble, avant une étape de concentration.

### Exemple 1

Dans un réacteur agité d'un litre, on introduit 394 g de bis(chlorosulfonyl)imide (HCSI) liquide et 19,7 g de 1,4-dioxane liquide. Le rapport massique entre le 1,4-dioxane et le HCSI est de 5%. Le mélange est agité à l'aide d'une turbine à 6 pales inclinées et est porté à 40°C, préalablement à l'introduction de l'acide fluorhydrique. La réaction est conduite en régulant la température du milieu réactionnel à 40°C et en injectant en continu l'HF gazeux. L'HF gazeux est injecté lentement directement dans le milieu réactionnel liquide au moyen d'un tube plongeur. La quantité totale d'HF injectée est de 110 g ce qui correspond à un ratio molaire HF par rapport au HCSI de 3. Le débit d'introduction de l'HF gazeux est régulé à 37 g/h. La durée de la réaction est de 3 heures. La réaction s'accompagne de la formation d'HCl qui est éliminé en continu du réacteur. Les gaz sortants du réacteur sont dirigés vers un piège à eau. Lorsque tout l'HF a été introduit, un flux d'azote d'un débit de 50 l/h est introduit dans le réacteur de façon à stripper l'HF et l'HCl pouvant être dissous dans le milieu réactionnel. Ce stripping est opéré pendant 5h et la température du milieu est maintenue à 40°C. les gaz de stripping sortant du réacteur sont également dirigés vers un piège à eau. Après stripping, le réacteur contient 336,3 g de bis(fluorosulfonyl)imide (HFSI) brut. La composition de ce HFSI brut est analysée par RMN.

| Composition du HFSI brut en % poids | |
|---|---|
| HFSI | 90,14 |
| FSO3H | 1,20 |
| FSO2NH2 | 0,39 |
| HF | 2,38 |
| 1,4-dioxane | 5,89 |

La conversion du HCSI est totale et atteint 100%. Le rendement en HFSI est de 90,8%.

### Exemple 2

Dans un réacteur agité d'un litre, on introduit 397 g de bis(chlorosulfonyl)imide (HCSI) liquide et 12 g de 1,4-dioxane liquide. Le rapport massique entre le 1,4-dioxane et le HCSI est de 3%. Le mélange est agité à l'aide d'une turbine à 6 pales inclinées et est porté à 45°C, préalablement à l'introduction de l'acide fluorhydrique. La réaction est conduite en régulant la température du milieu réactionnel à 45°C et en injectant en continu l'HF gazeux. L'HF gazeux est injecté lentement directement dans le milieu réactionnel liquide au moyen d'un tube plongeur. La quantité totale d'HF introduite est de 100 g ce qui correspond à un ratio molaire HF par rapport au HCSI de 2,7. Le débit d'introduction de l'HF gazeux est régulé à 38 g/h. La durée de la réaction est de 2 heures et 40 minutes. La réaction s'accompagne de la formation d'HCl qui est éliminé en continu du réacteur. Les gaz sortants du réacteur sont dirigés vers un piège à eau. Lorsque tout l'HF a été introduit, un flux d'azote d'un débit de 50 l/h est introduit dans le réacteur de façon à stripper l'HF et l'HCl pouvant être dissous dans le milieu réactionnel. Ce stripping est opéré pendant 5h et la température du milieu est maintenue à 45°C. les gaz de stripping sortant du réacteur sont également dirigés vers un piège à eau.

Après stripping, le réacteur contient 339,5 g de bis(fluorosulfonyl)imide (HFSI) brut. La composition de ce HFSI brut est analysée par RMN.

| Composition du HFSI brut en % poids | |
|---|---|
| HFSI | 92,92 |
| FSO3H | 1,23 |
| FSO2NH2 | 0,42 |
| HF | 1,92 |
| 1,4-dioxane | 3,51 |

La conversion du HCSI est totale et atteint 100%. Le rendement en HFSI est de 93,9%.

## Revendications

1. Procédé de préparation du bis(fluorosulfonyle) imide comprenant les étapes de :
i) la fourniture d'un courant **A1** comprenant HF et la fourniture d'un réacteur contenant une phase liquide **A2** comprenant du bis(halosulfonyle) imide ;
ii) dans ledit réacteur, la mise en contact de ladite phase liquide **A2** avec ledit courant **A1** pour produire du bis(fluorosulfonyle) imide ;
**caractérisé en ce que** ledit courant **A1** est injecté dans ladite phase liquide **A2.**

2. Procédé selon la revendication précédente **caractérisé en ce que** ledit réacteur comprend un moyen d'agitation mécanique de ladite phase liquide **A2.**

3. Procédé selon l'une quelconque des revendications précédentes **caractérisé en ce que** l'étape ii) est mise en œuvre dans des conditions de pression et de température de sorte à maintenir le bis(halosulfonyle) imide et le bis(fluorosulfonyle) imide produit sous forme liquide.

4. Procédé selon l'une quelconque des revendications précédentes **caractérisé en ce que**, au cours de l'étape ii), la température de ladite phase liquide **A2** est maintenue substantiellement constante.

5. Procédé selon la revendication précédente **caractérisé en ce que**, au cours de l'étape ii), la température de ladite phase liquide **A2** varie d'au maximum 5°C en valeur absolue, de préférence d'au maximum 3°C en valeur absolue, encore plus préférentiellement d'au maximum 2°C en valeur absolue, voire en particulier d'au maximum 1°C en valeur absolue.

6. Procédé selon l'une quelconque des revendications précédentes **caractérisé en ce que** ledit réacteur comprend également un tube plongeur par lequel ledit courant **A1** est injecté dans ladite phase liquide **A2.**

7. Procédé selon l'une quelconque des revendications précédentes **caractérisé en ce que** ledit réacteur comprend un moyen d'agitation mécanique de ladite phase liquide **A2** et ledit courant **A1** est injecté dans ladite phase liquide **A2** à proximité dudit moyen d'agitation mécanique.

8. Procédé l'une quelconque des revendications précédentes **caractérisé en ce que** la vitesse d'introduction, dans ladite phase liquide **A2,** de l'acide fluorhydrique contenu dans ledit courant **A1** est d'au moins 1 mole d'HF / mole de bis(halosulfonyle) imide / heure et, de préférence d'au plus 100 moles d'HF / mole de bis(halosulfonyle) imide / heure.

9. Procédé selon l'une quelconque des revendications précédentes **caractérisé en ce que** l'étape ii) est mise en œuvre avec un ratio molaire HF/[bis(halosulfonyle) imide] d'au moins 2,0 et d'au plus 3,0.

10. Procédé selon l'une quelconque des revendications précédentes **caractérisé en ce que** l'étape ii) est mise en œuvre à une température supérieure à 0°C.

11. Procédé selon l'une quelconque des revendications précédentes **caractérisé en ce que** le composé bis(halosulfonyle) imide est le bis(chlorosulfonyle) imide.

12. Procédé de préparation de sel de lithium de bis(fluorosulfonyle) imide comprenant les étapes :
a) mise en œuvre du procédé de préparation du bis(fluorosulfonyle) imide selon l'une quelconque des revendications précédentes 1 à 11 ;
b) mise en contact du bis(fluorosulfonyle) imide avec une composition comprenant au moins un sel de lithium pour former ledit sel de lithium de bis(fluorosulfonyle) imide.

## Patentansprüche

1. Verfahren zur Herstellung von bis-(Fluorsulfonyl)imid, das die folgenden Schritte umfasst:
i) Bereitstellen eines Stoffstroms A1, der HF umfasst, und Bereitstellen eines Reaktors, der eine flüssige Phase A2 enthält, welche bis-(Halogensulfonyl)imid umfasst;
ii) in dem Reaktor, Inkontaktbringen der flüssigen Phase A2 mit dem Stoffstrom A1, um bis-(Fluorsulfonyl)imid zu produzieren;
**dadurch gekennzeichnet, dass** der Stoffstrom A1 in die flüssige Phase A2 eingeleitet wird.

2. Verfahren nach dem vorhergehenden Anspruch, **dadurch gekennzeichnet, dass** der Reaktor ein Mittel zum mechanischen Rühren der flüssigen Phase A2 umfasst.

3. Verfahren nach einem beliebigen der vorhergehenden Ansprüche, **dadurch gekennzeichnet, dass** der Schritt ii) unter derartigen Druck- und Temperaturbedingungen durchgeführt wird, dass das bis-(Halogensulfonyl)imid und das produzierte bis-(Fluorsulfonyl)imid in flüssiger Form vorliegen.

4. Verfahren nach einem beliebigen der vorhergehenden Ansprüche, **dadurch gekennzeichnet, dass** die Temperatur der flüssigen Phase A2 im Laufe des Schrittes ii) im Wesentlichen konstant gehalten wird.

5. Verfahren nach dem vorhergehenden Anspruch, **dadurch gekennzeichnet, dass** die Temperatur der flüssigen Phase A2 im Laufe des Schrittes ii) um höchstens 5 °C als Absolutwert, vorzugsweise um höchstens 3 °C als Absolutwert, noch stärker bevorzugt um höchstens 2 °C als Absolutwert, oder sogar insbesondere um höchstens 1 °C als Absolutwert schwankt.

6. Verfahren nach einem beliebigen der vorhergehenden Ansprüche, **dadurch gekennzeichnet, dass** der Reaktor weiterhin ein Tauchrohr umfasst, durch welches der Stoffstrom A1 in die flüssige Phase A2 eingeleitet wird.

7. Verfahren nach einem beliebigen der vorhergehenden Ansprüche, **dadurch gekennzeichnet, dass** der Reaktor ein Mittel zum mechanischen Rühren der flüssigen Phase A2 umfasst und der Stoffstrom A1 in der Nähe des mechanischen Rührmittels in die flüssige Phase A2 eingeleitet wird.

8. Verfahren nach einem beliebigen der vorhergehenden Ansprüche, **dadurch gekennzeichnet, dass** die Geschwindigkeit beim Einleiten der Fluorwasserstoffsäure, welche im Stoffstrom A1 enthalten ist, in die flüssige Phase A2 mindestens 1 Mol an HF / Mol an bis-(Halogensulfonyl)imid / Stunde und vorzugsweise höchstens 100 Mol an HF / Mol an bis-(Halogensulfonyl)imid / Stunde beträgt.

9. Verfahren nach einem beliebigen der vorhergehenden Ansprüche, **dadurch gekennzeichnet, dass** der Schritt ii) mit einem Molverhältnis HF / [bis-(Halogensulfonyl)imid] von mindestens 2,0 und von höchstens 3,0 durchgeführt wird.

10. Verfahren nach einem beliebigen der vorhergehenden Ansprüche, **dadurch gekennzeichnet, dass** der Schritt ii) bei einer Temperatur von mehr als 0 °C durchgeführt wird.

11. Verfahren nach einem beliebigen der vorhergehenden Ansprüche, **dadurch gekennzeichnet, dass** es sich bei der Verbindung bis-(Halogensulfonyl)imid um bis-(Chlorsulfonyl)imid handelt.

12. Verfahren zur Herstellung eines Lithiumsalzes von bis-(Fluorsulfonyl)imid, wobei es die folgenden Schritte umfasst:
a) Durchführen des Verfahrens zur Herstellung des bis-Fluorsulfonyl)imids nach einem beliebigen der vorhergehenden Ansprüche 1 bis 11;
b) Inkontaktbringen des bis-(Fluorsulfonyl)imids mit einer Zusammensetzung, die mindestens ein Lithiumsalz umfasst, um das Lithiumsalz von bis-(Fluorsulfonyl)imid zu bilden.

## Claims

1. Process for preparing bis(fluorosulfonyl)imide comprising the steps of:
i) providing a stream A1 comprising HF and providing a reactor containing a liquid phase A2 comprising bis(halosulfonyl)imide;
ii) in said reactor, bringing said liquid phase A2 into contact with said stream A1 to produce bis(fluorosulfonyl)imide;
**characterized in that** said stream A1 is injected into said liquid phase A2.

2. Process according to the preceding claim, **characterized in that** said reactor comprises a means for mechanical stirring of said liquid phase A2.

3. Process according to either one of the preceding claims, **characterized in that** step ii) is carried out under pressure and temperature conditions so as to keep the bis(halosulfonyl)imide and the bis(fluorosulfonyl)imide produced in liquid form.

4. Process according to any one of the preceding claims, **characterized in that**, during step ii), the temperature of said liquid phase A2 is kept substantially constant.

5. Process according to the preceding claim, **characterized in that**, during step ii), the temperature of said liquid phase A2 varies by at most 5°C in absolute value, preferably by at most 3°C in absolute value, more preferentially still by at most 2°C in absolute value, or in particular by at most 1°C in absolute value.

6. Process according to any one of the preceding claims, **characterized in that** said reactor also comprises a dip tube through which said stream A1 is injected into said liquid phase A2.

7. Process according to any one of the preceding claims, **characterized in that** said reactor comprises a means for mechanical stirring of said liquid phase A2 and said stream A1 is injected into said liquid phase A2 close to said mechanical stirring means.

8. Process according to any one of the preceding claims, **characterized in that** the rate of introduction, into said liquid phase A2, of the hydrofluoric acid contained in said stream A1 is at least 1 mol of HF/mole of bis(halosulfonyl)imide/hour and preferably at most 100 mol of HF/mole of bis(halosulfonyl)imide/hour.

9. Process according to any one of the preceding claims, **characterized in that** step ii) is carried out with an HF/[bis(halosulfonyl)imide] molar ratio of at least 2.0 and at most 3.0.

10. Process according to any one of the preceding claims, **characterized in that** step ii) is performed at a temperature above 0°C.

11. Process according to any one of the preceding claims, **characterized in that** the bis(halosulfonyl)imide compound is bis(chlorosulfonyl)imide.

12. Process for preparing a lithium bis(fluorosulfonyl)imide salt, comprising the steps:
a) carrying out the process for preparing the bis(fluorosulfonyl)imide according to any one of the preceding Claims 1 to 11;
b) bringing the bis(fluorosulfonyl)imide into contact with a composition comprising at least one lithium salt in order to form said lithium bis(fluorosulfonyl)imide salt.
